(19) **Europäisches Patentamt**
**European Patent Office**
**Office européen des brevets**

(11) **EP 1 815 169 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(51) Int Cl.:
*F16H 61/12* (2010.01)  *F16H 61/04* (2006.01)
*F16H 61/32* (2006.01)

(21) Anmeldenummer: **05807159.8**

(22) Anmeldetag: **22.10.2005**

(86) Internationale Anmeldenummer:
**PCT/DE2005/001893**

(87) Internationale Veröffentlichungsnummer:
**WO 2006/053512 (26.05.2006 Gazette 2006/21)**

(54) **VERFAHREN ZUM FESTSTELLEN EINER BESCHÄDIGUNG IN DER SCHALTAKTORIK EINES AUTOMATISIERTEN SCHALTGETRIEBES**

METHOD FOR DIAGNOSING DAMAGE IN THE SHIFT MECHANISM OF AN AUTOMATIC GEARBOX

PROCEDE POUR METTRE EN EVIDENCE UNE DETERIORATION DANS LE SYSTEME DE COMMANDE DE COMMUTATION D'UNE BOITE DE VITESSES AUTOMATIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.11.2004 DE 102004055590**

(43) Veröffentlichungstag der Anmeldung:
**08.08.2007 Patentblatt 2007/32**

(73) Patentinhaber: **LuK Lamellen und Kupplungsbau Beteiligungs KG**
**77815 Bühl (DE)**

(72) Erfinder:
• **KLUMP, Markus**
**77830 Bühlertal (DE)**
• **WINKELMANN, Stefan**
**77815 Bühl (DE)**
• **PREISNER, Marian**
**77815 Bühl (DE)**
• **BERGER, Reinhard**
**77815 Bühl (DE)**

(56) Entgegenhaltungen:
**EP-A- 0 688 977       EP-A- 0 849 505**
**WO-A-00/73682       DE-A1- 10 038 195**
**DE-A1- 10 104 099   DE-A1- 10 137 590**
**DE-A1- 10 233 699   US-A- 5 582 558**

EP 1 815 169 B1

**Beschreibung**

Die Erfindung betrifft ein Verfahren, mit dem Beschädigungen in der Schaltaktorik, z.B. an einem Schaltfinger oder einem Zahnrad, in einem automatisierten Schaltgetriebe, wie z.B. einem Parallelschaltgetriebe (PSG), erfasst werden können, ohne die Bauteile selbst überprüfen zu müssen bzw. ehe aufgrund der Beschädigung einzelner Bauteile der Schaltaktorik weitere Bauteile beeinträchtigt werden. EP 0849505 offenbart ein solches Verfahren, wobei die Zeitdauer, die für die Synchronisierung eines Ganges benötigt wird, überwacht wird.

Aus Sicherheitsaspekten ist es gewünscht, Schaltaktorikdefekte möglichst in jedem Fahrzustand zu erkennen und vorzugsweise derart frühzeitig, dass beispielsweise Überschneidungsschaltungen in falsche Gänge, die auf aufgrund des Defekts fehlerhaft gewählt sind, vermieden werden. Dazu soll anhand von durch das automatisierte Schaltgetriebe erfassten Parametern bestimmt werden, ob ein Defekt in der Schaltaktorik vorliegt, vorzugsweise ehe eine fehlerhafte Überschneidungsschaltung auftritt.

Entsprechend ist es eine Aufgabe der Erfindung, ein Verfahren zum Feststellen einer Beschädigung in der Schaltaktorik eines automatisierten Schaltgetriebes bereitzustellen, das frühzeitig und während verschiedener Fahrzustände des Fahrzeugs eine Beschädigung in der Schaltaktorik erkennen kann.

Diese Aufgabe wird mit einem Verfahren mit den Merkmalen des Anspruchs 1 gelöst. Bevorzugte Ausführungsformen sind in den abhängigen Ansprüchen angegeben.

Das Verfahren zum Feststellen einer Beschädigung in der Schaltaktorik eines automatisierten Schaltgetriebes enthält die in dieser Reihenfolge Sequentiell ausgeführten Schritte:

(a) Ermitteln einer aktuellen Zeitdauer, die für eine Synchronisierung eines Gangs benötigt wird, Vergleichen der aktuellen Zeitdauer mit einer Sollzeitdauer für die Synchronisierung des Gangs und Feststellen, ob eine Beschädigung in der Schaltaktorik vorliegt, wobei eine Beschädigung angenommen wird, wenn die aktuelle Zeitdauer von der Sollzeitdauer abweicht; und/oder

(b) Bewegen eines Schaltaktors nach einem Einlegen eines Gangs bis zu einem Anschlag, Feststellen ob der rechte Anschlag ein interner Anschlag des Schaltaktors oder ein Getriebeanschlag ist, und Feststellen, ob eine Beschädigung in der Schaltaktorik vorliegt, wobei eine Beschädigung angenommen wird, wenn der erreichte Anschlag ein interner Anschlag des Schaltaktors ist; und/oder

(c) Ermitteln einer aktuellen Motordrehzahl während der Überschneidungsphase und Vergleichen der aktuellen Drehzahl mit einem Drehzahlbereich, in dem die Motordrehzahl während der Überschneidungsphase erwartet wird, und Feststellen, ob eine Beschädigung in der Schaltaktorik vorliegt, wobei eine Beschädigung angenommen wird, wenn die aktuelle Drehzahl nicht in dem Bereich für die erwartete Drehzahl liegt.

Der Erfindung liegt somit der Gedanke zugrunde, die bei automatisierten Schaltgetrieben vorhandene Synchronisierungsüberwachung bzw. Auswertungen von für die Getriebesteuerung erfassten Parametern zum Detektierten von Brüchen in der Schaltaktorik zu nutzen. Bei der Synchronisierungsüberwachung werden verschiedene Parameter erfasst, die geeignet ausgewertet werden, um eine Beschädigung in der Schaltaktorik festzustellen bzw. zumindest festzustellen, dass die Wahrscheinlichkeit, dass eine Beschädigung in der Schaltaktorik vorliegt, erhöht ist. Dazu wird erfindungsgemäß z.B. die Zeitdauer ausgewertet, welche für die Synchronisierung eines Gangs benötigt wird. Da diese Zeitdauer im Rahmen der Synchronisierungsüberwachung bestimmt wird, um gegebenenfalls die Synchronisierung einzuleiten bzw. abzuschließen, muss für die Feststellung, ob eine Beschädigung in der Schaltaktorik eines Schaltgetriebes vorliegt, keine zusätzliche Abspeicherung von Parametern vorgenommen werden.

Erfindungsgemäß wird zusätzlich zu der Auswertung der Parameter zur Synchronisierungsüberwachung der Getriebeanschlag, z.B. die zum Anschlag vom Schaltaktor zurückgelegte Wegstrecke, überwacht. Auch dieser Weg, der zwischen einer Neutralposition und einem Anschlag des Schaltaktors, z.B. eines Schaltfingers, zurückgelegt wird, wird im Rahmen der Steuerung eines automatisierten Schaltgetriebes bestimmt und muss für das erfindungsgemäße Verfahren lediglich passend ausgewertet werden.

Schließlich kann als weiterer Parameter zusätzlich die Drehzahl während der Überschneidungsphase überwacht werden, woraus zumindest dann, wenn bereits ein falscher Gang, d.h. nicht der Zielgang, vorgewählt ist auf eine Beschädigung eines Elements der Schaltaktorik zurückgeschlossen werden kann. Insbesondere ist dies dann möglich, wenn bei einem Schaltvorgang von einem höheren Ausgangsgang in einen niedrigeren Zielgang ein Gang fälschlicherweise vorgewählt ist, der höher als der Ausgangsgang ist, oder wenn umgekehrt bei einer Schaltung von einem niedrigeren Ausgangsgang in einen höheren Zielgang ein Gang vorgewählt ist, der niedriger als der Ausgangsgang ist.

Somit können durch das erfindungsgemäße Verfahren anhand bereits vorliegender Parameter, nämlich kombiniert der für die Synchronisierung eines Gangs benötigten Zeitdauer, des Bewegungswegs eines Schaltaktors und/oder der aktuellen Drehzahl des Motors während der Überschneidungsphase Rückschlüsse auf eine Beschädigung in der Schaltaktorik gezogen werden.

Erfindungsgemäß wird eine Beschädigung nur dann angenommen, wenn mindestens durch zwei der genannten Verfahren, vorzugsweise mindestens mittels Schritt (a) und (c) oder mittels Schritt (b) und (c) jeweils eine Beschädigung festgestellt wird.

Nach einer bevorzugten Ausführungsform wird in Schritt (a) die Zeitdauer während der Synchronisierung ermittelt und verglichen, die für den aktuellen Synchronisiervorgang benötigt wird, und bleibt eine Zeit unberücksichtigt, die zwischen dem Anfang des Synchronisiervorgangs bis zum Beginn der aktuellen Synchronisierung abläuft. Vorzugsweise wird in Schritt (a) die Sollzeitdauer des Synchronisiervorgangs aus einem Kennfeld ermittelt, in dem die Sollzeitdauer als Funktion von einem oder mehreren der folgenden Parameter abgelegt ist: Synchronkraft, Abtriebsdrehzahl, Übersetzungsverhältnis, Art der Schaltung.

Bevorzugter Weise wird in Schritt (a) zusätzlich bestimmt, durch welches Kriterium der aktuelle Synchronisiervorgang durch die Synchronisiersteuerung eingeleitet wird und durch welches Kriterium der aktuelle Synchronisiervorgang abgeschlossen wird, und wird eine Beschädigung in der Schaltaktorik dann festgestellt, wenn zusätzlich zum Abweichen der aktuellen Zeitdauer von der Sollzeitdauer gemäß Schritt (a) als Kriterium für sowohl das Einleiten als auch den Abschluss des aktuellen Synchronisiervorgangs der vom Schaltaktor zurückgelegte Weg dient.

Vorzugsweise weist das Verfahren weiter den Schritt des Aktivierens und Deaktivierens des Verfahrens zum Feststellen einer Beschädigung in Abhängigkeit vom Fahrzustand des Fahrzeugs auf.

Bevorzugter Weise ist dabei das Verfahren bei stehendem Fahrzeug und/oder bei Hochschaltungen mit kleinen Drehzahlsprüngen und/oder bei Rückschaltungen bei hohen Kräften und kleinen Drehzahlsprüngen deaktiviert. Vorzugsweise ist außerdem das Verfahren bei fahrendem Fahrzeug und Hochschaltungen mit großen Drehzahlsprüngen und/oder Rückschaltungen bis zu bestimmten Maximalkräften aktiviert. Dabei sind die Maximalkräfte bevorzugter Weise in Abhängigkeit vom Drehzahlsprung festgelegt.

Nach einer bevorzugten Ausführungsform wird in Schritt (b) die Art des Anschlags anhand von Wegstreckendifferenzen zwischen dem entspannten Zustand des Aktors und dem Anschlagszustand des Aktors bestimmt.

Nach einer bevorzugten Ausführungsform wird in Schritt (c) für eine Schubschaltung der Drehzahlbereich durch eine maximale negative Drehzahländerung und für eine Zugschaltung der Drehzahlbereich durch eine maximale positive Drehzahländerung bestimmt, wobei bei der Schubschaltung der erwartete Drehzahlbereich von der aktuellen Motordrehzahl nicht unterschritten und bei der Zugschaltung der erwartete Drehzahlbereich von der aktuellen Motordrehzahl nicht überschritten werden darf.

Nachfolgend wird die Erfindung mit Hilfe der beigefügten Figuren beispielhaft beschrieben, wobei:

Figur 1 Kennfelder von verschiedenen Parametern während einer ersten Phase der Synchronisierung zeigt;

Figur 2 Kennfelder von verschiedenen Parametern während einer zweiten Phase der Synchronisierung zeigt;

Figur 3 Kennfelder von durch einen Schaltaktor zurückgelegten Wegen zeigt;

Figur 4 eine inkrementelle Darstellung der in Figur 3 dargestellten Wege ist;

Figur 5 ausgewählte Parameter zur Drehzahlüberwachung für eine Zughochschaltung vom zweiten in den dritten Gang mit fehlerhaft vorgewähltem ersten Gang zeigt; und

Figur 6 entsprechende Parameter für eine Schubrückschaltung vom zweiten in den ersten Gang mit fehlerhaft vorgewähltem dritten Gang zeigt.

Zum Erfassen eines möglichen Bruchs in der Schaltaktorik, insbesondere von Schaltfingern oder Zahnrädern, in automatisierten Schaltgetrieben wird erfindungsgemäß anhand von zumeist softwaretechnisch erfassten Parametern bestimmt, ob eine erhöhte Wahrscheinlichkeit für eine beschädigte Schaltaktorik gegeben ist. Dazu wird während eines Schaltvorgangs bzw. im unmittelbaren Anschluss an einen Schaltvorgang mindestens einer von drei Schritten, die im Nachfolgenden beschrieben werden, ausgeführt und festgehalten, ob eine erhöhte Wahrscheinlichkeit für eine Beschädigung vorliegt oder nicht. Erfindungsgemäß werden die drei Schritte in ihrem zeitlichen Ablauf hintereinander ausgeführt, und es wird dann letztendlich von einem Bruch in der Schaltaktorik ausgegangen, wenn in allen drei Überwachungen ein Bruch detektiert wird, d.h. in jedem der drei im Folgenden beschriebenen Verfahren festgestellt wird, dass die Wahrscheinlichkeit für eine beschädigte Schaltaktorik erhöht ist. Wird nur mittels eines oder zweier der genannten Schritte eine erhöhte Wahrscheinlichkeit für eine beschädigte Schaltaktorik detektiert, so wird vorzugsweise eine erhöhte Wamstufe festgehalten, beispielsweise softwaretechnisch, und mittels des nächsten geeigneten Schaltvorgangs erneut eine Überprüfung vorgenommen, die mit dem vorhergehenden Schaltvorgang, der die erhöhte Warnstufe ausgelöst hat, verglichen wird, so dass daraus festgestellt werden kann, ob ein Bruch vorliegt oder nicht.

Gemäß dem ersten Schritt zur Bestimmung, ob eine gebrochene Schaltaktorik vorliegt, wird diejenige Zeit überwacht, welche für die Synchronisierung eines Gangs in einem automatisierten Schaltgetriebe benötigt wird. Da bei einer gebrochenen oder beschädigten Schaltaktorik der Schaltaktor (Schaltfinger) den Weg ohne Anhalten abläuft, den er im korrekten Fall zum Synchronisieren mit Verzögerungen zurücklegt, unterscheidet sich die für den Weg gemessene Zeit von der normalen Synchronzeit bei entsprechend gleichen Bedingungen, insbesondere bei vergleichbarer Synchronkraft und vergleichbarem Drehzahlsprung. Somit muss zum Erfassen, ob eine Beschädigung der Schaltaktorik eines automatisierten Schaltgetriebes vorliegt, die aktuell benötigte Synchronzeit mit einer zur verwendeten Synchronkraft und zum gegebenen Drehzahlsprung passenden Sollsynchronzeit, d.h. einer Mindestsynchronzeit, die aus entsprechenden Kennfeldern bestimmt werden kann, verglichen werden.

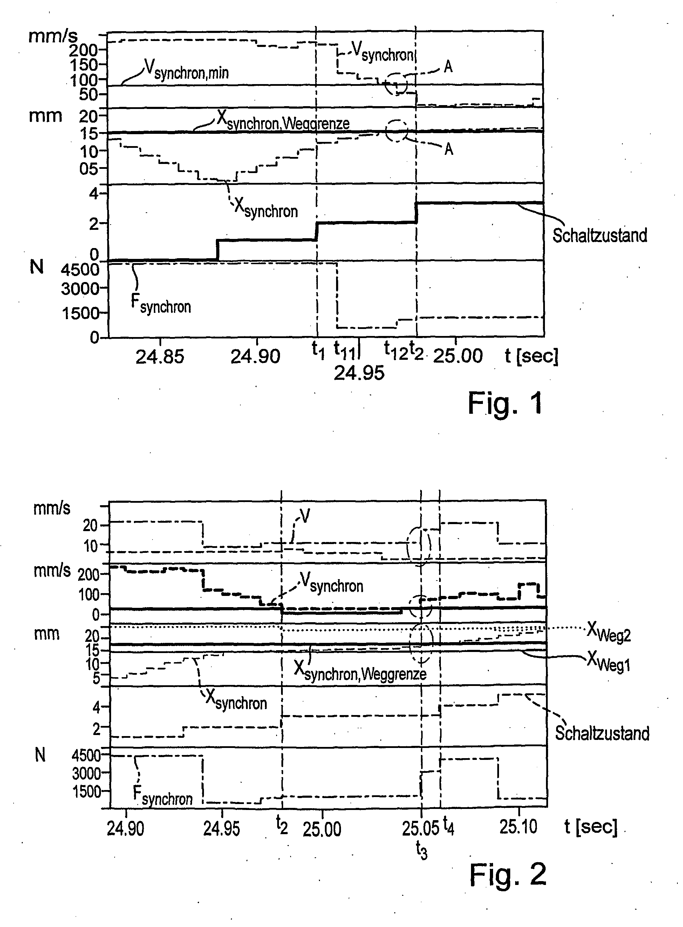

Bei einem aktuellen Schaltvorgang wird in einem automatisierten Schaltgetriebe, z.B. in einem Parallelschaltgetriebe, der Synchronisiervorgang in mehrere Abschnitte, nämlich Anfahren der Synchronisierung bis zum eigentlichen Synchronisiervorgang, Synchronisiervorgang bis Abschluss des Synchronisiervorgangs und neuer Zahnradeingriff unterteilt. In Figuren 1 und 2 sind verschiedene Parameter, die während des Synchronisiervorgangs überwacht werden, in ihrem zeitlichen Verlauf dargestellt. Dabei zeigt Figur 1 insbesondere den Verlauf der Synchrongeschwindigkeit $v_{synchron}$, der Synchronkraft $F_{synchron}$ sowie des vom Schaltfinger zurückgelegten Wegs $X_{synchron}$ zwischen den Zeitpunkten $t_1$ und $t_2$, was dem Abschnitt zwischen dem Anfahren der Synchronisierung und dem Beginn des eigentlichen Synchronisiervorgangs ($t_2$) entspricht.

Beim Einleiten des Synchronisiervorgangs fährt der Schaltfinger zunächst mit einer aus den Kennfeldern im Voraus bestimmten Synchrongeschwindigkeit $v_{synchron}$ in Richtung Synchronisierung, und wird zunächst geschwindigkeitsgesteuert verfahren. Die Synchronkraft $F_{synchron}$ bleibt während dieser Zeit ($t_1$ bis $t_{11}$) auf einem voreingestellten Wert unverändert. Um weiterhin die Synchrongeschwindigkeit $v_{synchron}$ über einen Mindestwert für die Synchrongeschwindigkeit $v_{synchron, min}$ zu halten, wird während einer zweiten Phase zwischen $t_{11}$ und $t_{12}$ die Synchronkraft $F_{synchron}$ verringert.

Wie aus Figur 1 zu entnehmen ist, verzögert der Schaltfinger, sobald die Synchronisierung erreicht ist, d.h. sobald die Synchrongeschwindigkeit $v_{synchron}$ des Schaltfingers unter einen aus Gang und Kraft bestimmten Mindestwert $v_{synchron, min}$ abfällt oder von der Synchronisierung abprallt. Zudem kann als Sicherheit zur Erkennung der Synchronisierung die Position des Schaltfingers ($x_{synchron}$) mit einem Festwert $x_{synchron, Weggrenze}$ abgeglichen werden, so dass z.B. auch ein Übergang in den nächsten Schaltzustand bei $t_2$ initialisiert werden kann, sollten die Geschwindigkeitskriterien des Schaltfingers nicht zum Erkennen des Synchronzustands geführt haben. Bei dem in Figur 1 dargestellten Verlauf löst das Erreichen des Geschwindigkeitskriteriums durch $v_{synchron}$ den Übergang in die nächste Schaltstufe, d.h. den Bereich zwischen Synchronisieren und Synchronisiert, aus und leitet den aktuellen Synchronisiervorgang ein (Kreise A in Fig. 1). Zu diesem Zeitpunkt wird die Synchronkraft $F_{synchron}$ auf einen aus Kennfeldern bestimmten Wert hochgesetzt, wobei gegebenenfalls schrittweise vorgegangen wird, damit eine maximale Schrittweite und damit ein maximaler Synchronkraftsprung nicht überschritten wird.

In Figur 2 ist der weitere Verlauf eines Synchronisiervorgangs dargestellt, bei dem die eigentliche Synchronisierung durchgeführt wird. Die Synchronisierung gilt als zum Zeitpunkt $t_3$, zu dem der Schaltfinger wieder beschleunigt (ansteigende $v_{synchron}$), als abgeschlossen. Die Schaltgeschwindigkeit $v_{synchron}$ muss größer als die aus einem Kennfeld ermittelte Geschwindigkeit für den Abschluss des Synchronisiervorgangs sein und der Betrag des Schaltwegs $x_{synchron}$ kleiner als zumindest eine vorgegebene Weggrenze $x_{Grenz1}$, $x_{Grenz2}$. Die Wiederbeschleunigung des Schaltfingers wird anhand verschiedener Abgleiche über die Geschwindigkeit des Schaltfingers, die verstrichene Zeit seit Schaltbeginn und den Weg des Schaltfingers detektiert. Außerdem wird das Ende dieses Schaltzustands ($t_3$) ebenfalls über ein Absolutwegkriterium $x_{synchron, Weggrenze}$ abgeglichen. Wenn also der Aktorweg eine vorgegebene Endposition für die Synchronisierung überschritten hat, wird die Synchronisierung als abgeschlossen angesehen, unabhängig davon, ob eine Wiederbeschleunigung des Aktors erfasst werden konnte. Der Schaltzustand wechselt und der Gang wird eingelegt, wozu die Synchronkraft auf eine maximale Kraftkonstante angehoben wird (Zeitraum zwischen $t_3$ und $t_4$).

Zur Überwachung bzw. zum Feststellen einer Beschädigung in der Schaltaktorik wird vorzugsweise diejenige Zeit festgehalten, die zwischen dem Einleiten des tatsächlichen Synchronisiervorgangs und dessen Abschluss verstreicht ($t_2 - t_3$ oder $t_2 - t_4$). Aus einem Kennfeld wird gleichzeitig eine minimal erwartete Zustandszeit zwischen $t_2 - t_3$ oder $t_2 - t_4$ bereitgestellt. Je umfangreicher das Kennfeld gestaltet ist, d.h. je mehr unterschiedliche Zustände abgespeichert sind bzw. je mehr Parameter (Drehzahlen, Synchronkraft, Übersetzungsverhältnis, Unterscheidung Hoch-/Rückschaltung) die Grundlage des Kennfelds sind, in um so mehr Fahrzuständen kann eine Überwachung zum Feststellen einer Beschädigung in der Schaltaktorik anhand der für die Synchronisierung eines Gangs benötigten Zeitdauer sinnvoll durchgeführt werden. Anhand des aus dem Kennfeld entnommenen Werts für die minimale Zustandszeit, der mit dem Wert für die aktuelle Zustandszeit verglichen wird, kann abgeschätzt werden, ob ein korrekter, d.h. beschädigungsfreier Schaltvorgang durchgeführt wurde, oder ob der Aktor im freien Durchlauf war, d.h. eine Beschädigung vorliegt. Ein beschädigungsfreier Schaltvorgang wird angenommen, wenn die aktuelle verstrichene Zeit mindestens die aus dem Kennfeld entnommene Zustandszeit ist. Umgekehrt wird bei Unterschreiten der Mindestzustandszeit aus dem Kennfeld auf eine Beschädigung geschlossen.

Als weiteres Indiz für eine Beschädigung kann zudem herangezogen werden, ob die oben beschriebenen Schaltvorgänge über die Wegkriterien oder über die Geschwindigkeitskriterien eingeleitet wurden. Werden die Wegkriterien verwendet, so steigt die Wahrscheinlichkeit für eine Beschädigung in der Schaltaktorik.

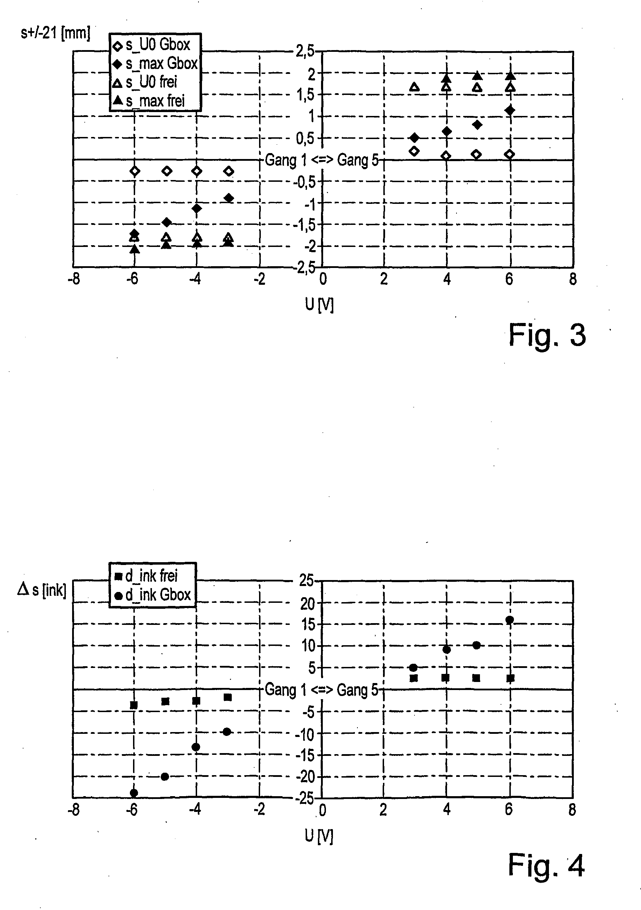

Wenn in diesem ersten Schritt eine erhöhte Wahrscheinlichkeit für eine Beschädigung in der Schaltaktorik festgestellt und festgehalten wird, wird ein zweiter Schritt eingeleitet, der auf einer Überwachung der Getriebeanschläge beruht. Dazu wird nach jedem Einlegen eines Gangs der Schaltaktor weiter bis zum Getriebeanschlag gefahren und in die Endlage in Schaltrichtung überdrückt. Das ist in Figur 3 dargestellt, wobei auf der x-Achse eine Spannung in Volt dargestellt ist, welche zum Überdrücken des Aktors verwendet wird und auf der y-Achse der zurückgelegte Weg dargestellt ist. Die Karos zeigen den Wegstreckenverlauf für den unbeschädigten Zustand, bei dem die Schaltfinger gegen die Schaltstangen im Getriebe als Anschlag fahren. Dreiecksymbole in Figur 3 stellen den Fall dar, bei dem bei gebrochener Schaltaktorik die Schaltfinger gegen den internen Anschlag des Aktors gedrückt werden. Ferner zeigen ausgefüllte Symbole in Figur 3 den jeweils bei entsprechender Überdrückungsspannung maximal erreichten Weg und hohle Symbole die Position, die sich nach dem Entspannen einstellt.

Aus Figur 3 ist erkennbar, dass die Schaltstangen (Anschläge im Getriebe) weicher sind als die internen Anschläge im Aktor, so dass bei mäßigen Tastspannungen geringere Wegstrecken zurückgelegt werden, ehe der Anschlag erreicht ist. Da jedoch, wie aus Figur 3 ebenfalls zu erkennen ist, bei großen Spannungen die absolute Position zwischen beschädigtem und unbeschädigtem Getriebeanschlag gering ist, wird vorzugsweise zum Bestimmen, ob eine Beschädigung in der Schaltaktorik eines automatisierten Schaltgetriebes vorhanden ist, die Differenz von maximal erreichtem Weg und entspannter Position ausgewertet. Dies ist in Figur 4 dargestellt, wobei Punkte den funktionierenden, unbeschädigten Getriebeanschlag darstellen und Karos freie Anschläge darstellen, d.h. wenn die Schaltfinger gegen den internen Anschlag des Aktors gedrückt werden.

Aus Figur 4 ist zu erkennen, dass eine Beschädigung dann angenommen wird, wenn die Wegstreckendifferenz unter einen Grenzwert fällt, da dann angenommen werden kann, dass der Schaltfinger gegen einen internen Anschlag läuft. Daher wird unmittelbar nach Abschluss eines Schaltvorgangs, bei dem mittels der Synchronisierung eine erhöhte Wahrscheinlichkeit für eine Beschädigung festgestellt wurde, der Anschlag überdrückt und eine entsprechende Auswertung vorgenommen.

In Ergänzung zu den beiden vorher beschriebenen Verfahren kann eine Beschädigung in der Schaltaktorik eines automatisierten Schaltgetriebes auch anhand einer Drehzahlüberwachung während der Überschneidungsphase festgestellt werden. Wenn eine beschädigte Schaltaktorik vorliegt, kann es vorkommen, dass ein falscher Gang vorgewählt ist und nicht korrigiert wird oder aufgrund der Beschädigung nicht korrigiert werden kann. Der früheste Zeitpunkt, zu dem dies erfasst werden kann, ist eine Überschneidungsschaltung oder der Zeitpunkt, zu dem die Kupplung des vorgewählten Gangs anfängt, Moment zu übertragen.

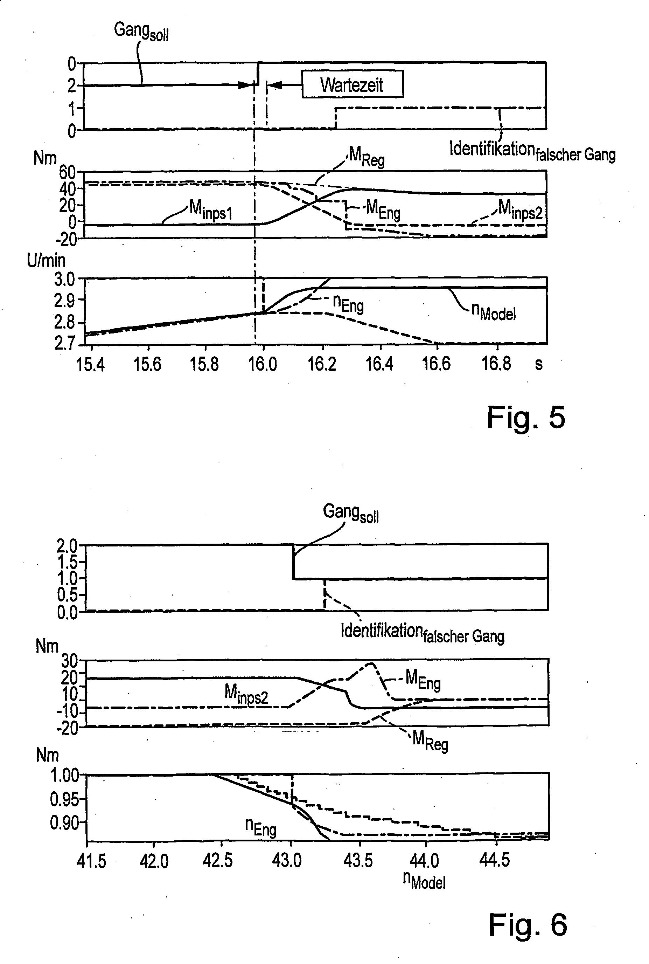

Bei einer Zugschaltung (von einem niedrigeren in einen höheren Gang) sind in der Regel beide Eingangswellendrehzahlen unter der Motordrehzahl. Eine Beschädigung kann dann anhand eines veränderten Verhaltens der Motordrehzahl bestimmt werden, wenn die Eingangswellendrehzahl der Zielwelle über der Motordrehzahl liegt, was beispielsweise dann passiert, wenn z.B. bei einer Schaltung vom zweiten in den dritten Gang fälschlicherweise der erste statt dem dritten Gang vorgewählt ist. Diese Situation ist in Figur 5 gezeigt.

In Figur 5 bezeichnet $Gang_{soll}$ den Schaltzustand (Gangverlauf) bei korrekter Funktion und $Identifikation_{falscher Gang}$ den Zeitpunkt; zu dem der falsche Gang erkannt ist. "0" bezeichnet dabei einen Zustand, während dessen der falsche Gang nicht erkannt wird oder erkannt werden kann, "1" den Zustand, wenn die Fehlfunktion erkannt ist. In der Mitte in Figur 5 sind Kupplungsmomente dargestellt, wobei $M_{Req}$ das erforderliche Kupplungsmoment, $M_{Eng}$ das Motormoment und $M_{insp1}$ bzw. $M_{insp2}$ das Kupplungsmoment der Eingangswellen sind. Aus dem dritten Diagramm in Figur 5 ist deutlich zu erkennen, dass bei einer Zugschaltung vom zweiten in den dritten Gang, bei der fälschlicherweise der erste statt dem dritten Gang vorgewählt ist, die aktuelle Motordrehzahl $n_{Eng}$ im Verlauf des Schaltvorgangs, nämlich dann, wenn der falsche vorgewählte Gang anfängt, Moment zu übertragen, über der erwarteten Drehzahl $n_{Model}$ liegt. Somit kann bei einer Zugschaltung auf eine Beschädigung in der Schaltaktorik geschlossen werden, wenn durch die aktuelle Motordrehzahl $n_{Eng}$ ein durch die berechnete Drehzahl $n_{Model}$ begrenzter Bereich überschritten wird.

Figur 6 zeigt unter Verwendung entsprechender Bezeichnungen das Verfahren für eine Schubschaltung, beispielsweise eine Schaltung vom zweiten in den ersten Gang (Kurve $Gang_{soll}$), bei der fälschlicherweise der dritte statt dem ersten Gang vorgewählt ist. Hier wird auf einen Fehler in der Schaltaktorik geschlossen ($Identifikation_{falscher Gang}$), wenn die aktuelle Motordrehzahl $n_{Eng}$ den vorberechneten Wert bei größter zulässiger angenommener Abweichung für die Drehzahl $n_{Model}$ unterschreitet.

In anderen Fällen, in denen der falsch vorgewählte Gang zufälligerweise zum richtigen Momentfluss an die Kupplung führt, z.B. weil der nicht bzw. falsch vorgewählte Gang zufällig identisch mit dem erwarteten Gang ist oder in gleicher Schaltrichtung liegt, kann sich ein falsch eingelegter Gang nicht anhand der Beobachtung der Motordrehzahl während der Überschneidung bestimmen lassen. Wenn z.B. bei einer Schubschaltung vom vierten in den dritten Gang der erste Gang statt dem dritten eingelegt ist, kann keine Erfassung vorgenommen werden.

Für die Fälle, in denen eine Erfassung möglich ist, wird ausgehend von der Motordrehzahl am Anfang der Überschneidung ein Drehzahlbereich bestimmt, innerhalb dessen die Drehzahländerung bzw. die aktuelle Motordrehzahl erwartet wird. Für die Schubschaltung wird eine maximale negative Drehzahländerung bestimmt, wobei die aktuelle Motordrehzahl dann auf einen Fehler in der Schaltaktorik hinweist, wenn sie unter dem berechneten Drehzahlbereich liegt. Für eine Zugschaltung wird entsprechend eine maximale positive Drehzahländerung bestimmt, so dass auf einen Fehler dann geschlossen wird, wenn die aktuelle Motordrehzahl über der durch die maximale positive Drehzahländerung erhöhten Drehzahl liegt. Zur Bestimmung des Drehzahlbereichs kann somit mit Hilfe einer maximalen prozentualen Abweichung (Err = 100 $\pm$ K_ErrorMax) die Drehzahländerung durch Variation der Momentenfehler berechnet werden, wobei diejenige Drehzahländerung verwendet wird, die im gegebenen Fall am größten ist. Zur Berechnung der Drehzahländerung kann die Formel

$$\Delta\omega = \frac{\Delta t \cdot \left\lfloor T_{Eng} \cdot Err_{Eng} - (\mathrm{sgn}(\Delta n_1)T_{Cl1}Err_{Cl1} + \mathrm{sgn}(\Delta n_2)T_{Cl2}Err_{Cl2}) \right\rfloor}{J_{Eng}} \tag{1}$$

verwendet werden. Dabei stellt Err jeweils den Momentenfehler dar, T das Trägheitsmoment des Motors bzw. der ersten und zweiten Kupplung und n die entsprechenden Drehzahlen. J stellt das Flächenträgheitsmoment des Motors dar.

Damit die Getriebeüberwachung sinnvoll während möglichst vieler Fahrzustände des Fahrzeugs durchgeführt werden kann, wird es bevorzugt, dass die Überwachung generell aktiviert ist und lediglich dann die Überwachung abgeschaltet wird, wenn aufgrund des Fahrzustands keine vernünftige Beschädigungsfeststellung möglich ist. Dies ist beispielsweise dann der Fall, wenn das Fahrzeug steht oder wenn Hochschaltungen bei kleinen Drehzahlsprüngen vorgenommen werden. Auch Rückschaltungen bei sehr hohen Kräften und kleinen Drehzahlsprüngen sind zum Feststellen einer Beschädigung der Schaltaktorik nicht geeignet, da insbesondere in diesen Fahrzuständen die Synchronzeiten eines freilaufenden Aktors (Beschädigung) nicht von denen eines im Getriebe eingebauten und funktionierenden Aktors zu unterscheiden sind. Besonders günstig ist eine Überwachung hingegen bei Rückschaltungen bei fahrendem Fahrzeug und Kräften, die unter einer Maximalkraft liegen. Die Maximalkraft ist dabei in Abhängigkeit vom Drehzahlsprung festzulegen. Auch bei Hochschaltungen im fahrenden Fahrzeug und großen Drehzahlsprüngen ist eine Überwachung möglich.

Statt die Überwachung generell zu aktivieren und lediglich bestimmte Fahrsituationen auszunehmen, kann die Überwachung alternativ nur dann eingeschaltet werden, wenn die genannten, zur Identifizierung eines Schaltaktorikfehlers geeigneten Fahrzustände gegeben sind, und ansonsten im deaktivierten Zustand bleiben.

**Patentansprüche**

1. Verfahren zum Feststellen einer Beschädigung in der Schaltaktorik eines automatisierten Schaltgetriebes, enthaltend die in dieser Reihenfolge sequentiell ausgeführten Schritte:

   (a) Ermitteln einer aktuellen Zeitdauer, die für eine Synchronisierung eines Ganges benötigt wird, Vergleichen der aktuellen Zeitdauer mit einer Sollzeitdauer für die Synchronisierung des Gangs und Feststellen, ob eine Beschädigung in der Schaltaktorik vorliegt, wobei eine Beschädigung angenommen wird, wenn die aktuelle Zeitdauer von der Sollzeitdauer abweicht;
   (b) Bewegen eines Schaltaktors nach einem Einlegen eines Ganges bis zu einem Anschlag, Feststellen, ob der erreichte Anschlag ein interner Anschlag des Schaltaktors oder ein Getriebeanschlag ist, und Feststellen, ob eine Beschädigung in der Schaltaktorik vorliegt, wobei eine Beschädigung angenommen wird, wenn der erreichte Anschlag ein interner Anschlag des Schaltaktors ist;
   (c) Ermitteln einer aktuellen Motordrehzahl während der Überschneidungsphase und Vergleichen der aktuellen Drehzahl mit einem Drehzahlbereich, in dem die Motordrehzahl während der Überschneidungsphase erwartet wird, und Feststellen, ob eine Beschädigung in der Schaltaktorik vorliegt, wobei eine Beschädigung angenommen wird, wenn die aktuelle Drehzahl nicht in dem Bereich für die erwartete Drehzahl liegt,

   wobei die Schritte (b) und/oder (c) nur dann ausgeführt werden, wenn im jeweils vorhergehenden Schritt eine Beschädigung angenommen wurde.

2. Verfahren nach Anspruch 1, **dadurch gekennzeichnet, dass** eine Beschädigung nur dann angenommen wird, wenn mindestens mittels Schritt (a) und (c) oder mittels Schritt (b) und (c) jeweils eine Beschädigung festgestellt wird.

3. Verfahren nach einem der vorhergehenden Ansprüche, **dadurch gekennzeichnet, dass** in Schritt (a) die Zeitdauer während der Synchronisierung ermittelt und verglichen wird, die für den aktuellen Synchronisiervorgang benötigt wird, und eine Zeit unberücksichtigt bleibt, die zwischen dem Anfahren des Synchronisiervorgangs bis zum Beginn des aktuellen Synchronisiervorgangs abläuft.

4. Verfahren nach einem der vorhergehenden Ansprüche, **dadurch gekennzeichnet, dass** in Schritt (a) die Sollzeitdauer aus einem Kennfeld ermittelt wird, in dem die Sollzeitdauer als Funktion von einem oder mehreren der folgenden Parameter abgelegt ist: Synchronkraft, Abtriebsdrehzahl, Übersetzungsverhältnis, Art der Schaltung.

5. Verfahren nach einem der vorhergehenden Ansprüche, **dadurch gekennzeichnet, dass** in Schritt (a) zusätzlich bestimmt wird, durch welches Kriterium der aktuelle Synchronisiervorgang durch eine Synchronisiersteuerung des automatisierten Schaltgetriebes eingeleitet wird und durch welches Kriterium der aktuelle Synchronisiervorgang abgeschlossen wird, und eine Beschädigung in der Schaltaktorik dann festgestellt wird, wenn zusätzlich zum Abweichen der aktuellen Zeitdauer von der Sollzeitdauer als Kriterium für sowohl das Einleiten als auch den Abschluss des aktuellen Synchronisiervorgangs der vom Schaltaktor zurückgelegte Weg dient.

6. Verfahren nach einem der vorhergehenden Ansprüche, **gekennzeichnet durch** den Schritt des Aktivierens und Deaktivierens des Verfahrens zum Feststellen einer Beschädigung in Abhängigkeit vom Fahrzustand des Fahrzeugs.

7. Verfahren nach Anspruch 6, **dadurch gekennzeichnet, dass** das Verfahren bei stehendem Fahrzeug und/oder bei Hochschaltungen mit kleinen Drehzahlsprüngen und/oder bei Rückschaltungen bei hohen Kräften und kleinen Drehzahlsprüngen deaktiviert ist.

8. Verfahren nach Anspruch 6 oder 7, **dadurch gekennzeichnet, dass** das Verfahren bei fahrendem Fahrzeug und Hochschaltungen mit großen Drehzahlsprüngen und/oder Rückschaltungen bis zu bestimmten Maximalkräften aktiviert ist.

9. Verfahren nach Anspruch 8, **dadurch gekennzeichnet, dass** die Maximalkräfte in Abhängigkeit vom Drehzahlsprung festgelegt sind.

10. Verfahren nach einem der vorhergehenden Ansprüche, **dadurch gekennzeichnet, dass** in Schritt (b) anhand von Differenzen der Wegstrecke zwischen entspanntem Zustand des Aktors und Anschlag des Aktors die Art des Anschlags bestimmt wird.

11. Verfahren nach einem der vorhergehenden Ansprüche, **dadurch gekennzeichnet, dass** in Schritt (c) für eine Schubschaltung der Drehzahlbereich durch eine maximale negative Drehzahländerung und für eine Zugschaltung der Drehzahlbereich durch eine maximale positive Drehzahländerung bestimmt wird, wobei bei der Schubschaltung der Drehzahlbereich von der aktuellen Motordrehzahl nicht unterschritten und bei der Zugschaltung der Drehzahlbereich von der aktuellen Motordrehzahl nicht überschritten werden darf.

**Claims**

1. Method for detecting damage in the shift actuating means of an automatic shift gearbox, comprising the steps, carried out sequentially in this sequence:

   (a) determining a present time duration required for a synchronization of a gear, comparing the present time duration with a nominal time duration for the synchronization of the gear, and detecting whether damage is present in the shift actuating means, with damage being assumed if the present time duration deviates from the nominal time duration;
   (b) after an engagement of a gear, moving a shift actuator as far as a stop, detecting whether the stop which has been reached is an internal stop of the shift actuator or a gearbox stop, and detecting whether damage is present in the shift actuating means, with damage being assumed if the stop which has been reached is an internal stop of the shift actuator;
   (c) determining a present engine rotational speed during the overlap phase and comparing the present rotational speed with a rotational speed range in which the engine rotational speed is expected to lie during the overlap phase, and detecting whether damage is present in the shift actuating means, with damage being assumed if the present rotational speed does not lie in the range for the expected rotational speed,

with steps (b) and/or (c) being carried out only when damage has been assumed in the in each case preceding step.

2. Method according to Claim 1, **characterized in that** damage is assumed only when damage is detected in each case at least by means of steps (a) and (c) or by means of steps (b) and (c).

3. Method according to one of the preceding claims, **characterized in that**, in step (a), during the synchronization, the time duration required for the present synchronization process is determined and compared, and a time which elapses between the initiation of the synchronization process and the start of the present synchronization process is disregarded.

4. Method according to one of the preceding claims, **characterized in that**, in step (a), the nominal time duration is determined from a characteristic map in which the nominal time duration is stored as a function of one or more of the following parameters: synchronizing force, drive output rotational speed, transmission ratio, type of shift.

5. Method according to one of the preceding claims, **characterized in that**, in step (a), it is additionally determined by what criterion the present synchronization process is initiated by means of a synchronization controller of the automatic gearbox and by what criterion the present synchronization process is ended, and damage in the shift actuating means is detected when, in addition to the deviation of the present time duration from the nominal time duration, the distance travelled by the shift actuator also serves as a criterion for both the initiation and also the ending of the present synchronization process.

6. Method according to one of the preceding claims, **characterized by** the step of activating and deactivating the method for detecting damage as a function of the driving state of the vehicle.

7. Method according to Claim 6, **characterized in that** the method is deactivated when the vehicle is stationary and/or during upshifts with small rotational speed steps and/or during downshifts with large forces and small rotational speed steps.

8. Method according to Claim 6 or 7, **characterized in that** the method is activated when the vehicle is travelling and during upshifts with large rotational speed steps and/or downshifts up to certain maximum forces.

9. Method according to Claim 8, **characterized in that** the maximum forces are defined as a function of the rotational speed step.

10. Method according to one of the preceding claims, **characterized in that**, in step (b), the type of stop is determined on the basis of differences in the distance between the relaxed state of the actuator and the stop of the actuator.

11. Method according to one of the preceding claims, **characterized in that**, in step (c), for an overrun shift, the rotational speed range is determined by a maximum negative rotational speed change and, for a traction shift, the rotational speed range is determined by means of a maximum positive rotational speed change, wherein during the overrun shift, the rotational speed range must not be undershot by the present engine rotational speed, and during the traction shift, the rotational speed range must not be overshot by the present engine rotational speed.

## Revendications

1. Procédé de constatation d'un dommage dans les actionneurs de changement de rapport d'une boîte de vitesses automatisée, comprenant les étapes exécutées séquentiellement dans l'ordre ci-après :

   a) Détermination d'une durée actuelle qui est nécessaire pour une synchronisation d'un rapport, Comparaison de la durée actuelle avec une durée de consigne pour la synchronisation du rapport et Constatation de la présence ou non d'un dommage dans les actionneurs de changement de rapport, un dommage étant supposé lorsque la durée actuelle est différente de la durée de consigne ;
   b) Déplacement d'un actionneur de changement de rapport après avoir engagé un rapport jusqu'à une butée, Vérification si la butée atteinte est une butée interne de l'actionneur de changement de rapport ou une butée de boîte de vitesse et Vérification de la présence ou non d'un dommage dans les actionneurs de changement de rapport, un dommage étant supposé lorsque la butée atteinte est une butée interne de l'actionneur de changement de rapport ;

c) Détermination d'une vitesse de rotation actuelle du moteur pendant la phase d'intersection et Comparaison de la vitesse de rotation actuelle avec une plage de vitesses de rotation dans laquelle est attendue la vitesse de rotation du moteur pendant la phase d'intersection, et Vérification de la présence ou non d'un dommage dans les actionneurs de changement de rapport, un dommage étant supposé lorsque la vitesse de rotation actuelle ne se trouve pas dans la plage de vitesses de rotation attendue,

les étapes (b) et/ou (c) n'étant exécutées que si un dommage a été supposé dans l'étape précédente respective.

2. Procédé selon la revendication 1, **caractérisé en ce qu'**un dommage n'est supposé que si un dommage a respectivement été constaté au moins au moyen des étapes (a) et (c) ou au moyen des étapes (b) et (c).

3. Procédé selon l'une des revendications précédentes, **caractérisé en ce qu'**à l'étape (a), la durée qui est nécessaire pour l'opération de synchronisation actuelle est déterminée pendant la synchronisation et comparée et une durée qui s'écoule entre le démarrage de l'opération de synchronisation et le début de l'opération de synchronisation actuelle n'est pas prise en compte.

4. Procédé selon l'une des revendications précédentes, **caractérisé en ce qu'**à l'étape (a), la durée de consigne est déterminée à partir d'un diagramme caractéristique dans lequel est enregistrée la durée de consigne en fonction d'un ou plusieurs des paramètres suivants : force de synchronisation, vitesse de rotation d'entraînement, rapport de démultiplication, nature du changement de rapport.

5. Procédé selon l'une des revendications précédentes, **caractérisé en ce que** l'étape (a) consiste à déterminer tout d'abord les critères selon lesquels l'opération de synchronisation actuelle a été initiée par une commande de synchronisation de la boîte de vitesses automatisée et les critères selon lesquels l'opération de synchronisation actuelle a été achevée, et un dommage dans les actionneurs de changement de rapport est constaté lorsque, en plus de la différence entre la durée actuelle et la durée de consigne, la course parcourue par l'actionneur de changement de rapport sert de critère à la fois pour l'initiation et pour l'achèvement de l'opération de synchronisation actuelle.

6. Procédé selon l'une des revendications précédentes, **caractérisé par** l'étape d'activation et de désactivation du procédé de constatation d'un dommage en fonction de la situation de déplacement du véhicule.

7. Procédé selon la revendication 6, **caractérisé en ce que** le procédé est désactivé lorsque le véhicule est à l'arrêt et/ou lors des changements vers un rapport supérieur avec de petits sauts de vitesse de rotation et/ou lors des changements vers un rapport inférieur avec des forces élevées et des petits sauts de vitesse de rotation.

8. Procédé selon la revendication 6 ou 7, **caractérisé en ce que** le procédé est activé lorsque le véhicule est en déplacement et lors des changements vers un rapport supérieur avec des sauts de vitesse de rotation importants et/ou lors des changements vers un rapport inférieur jusqu'à des forces maximales données.

9. Procédé selon la revendication 8, **caractérisé en ce que** les forces maximales sont déterminées en fonction du saut de vitesse de rotation.

10. Procédé selon l'une des revendications précédentes, **caractérisé en ce que** dans l'étape (b), la nature de la butée est déterminée au moyen des différences de courses entre l'état détendu de l'actionneur et la butée de l'actionneur.

11. Procédé selon l'une des revendications précédentes, **caractérisé en ce que** dans l'étape (c), la plage de vitesses de rotation pour un changement de rapport en poussée est déterminée par une variation négative maximale de la vitesse de rotation et la plage de vitesses de rotation pour un changement de rapport en traction est déterminée par une variation positive maximale de la vitesse de rotation, la vitesse de rotation actuelle du moteur ne devant pas devenir inférieure à la plage de vitesses de rotation dans le cas d'un changement de rapport en poussée et ne devant pas devenir supérieure à la plage de vitesses de rotation dans le cas d'un changement de rapport en traction.

Fig. 1

Fig. 2

Fig. 3

Fig. 4

Gang$_{soll}$

Wartezeit

Identifikation$_{falscher\ Gang}$

Nm

M$_{Reg}$

M$_{inps1}$

M$_{Eng}$

M$_{inps2}$

U/min

n$_{Eng}$

n$_{Model}$

Fig. 5

Gang$_{soll}$

Identifikation$_{falscher\ Gang}$

Nm

M$_{inps2}$

M$_{Eng}$

M$_{Reg}$

Nm

n$_{Eng}$

n$_{Model}$

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0849505 A